# FASCICULE DE BREVET EUROPEEN

(11) **EP 1 216 934 B1**
(45) Date de publication et mention de la délivrance du brevet: **08.03.2006**
(21) Numéro de dépôt: 01403204.9
(22) Date de dépôt: 11.12.2001
(51) Int. Cl.: B65D 83/14, B05B 11/00

(54) **Dispositif de fixation d'organe de distribution sur un col de récipient**
Vorrichtung zur Befestigung einer Abgabevorrichtung auf den Hals eines Behälters
Device for fixing a dispensing member on the neck of a container

(30) Priorité: 20.12.2000 FR 0016700
(43) Date de publication de la demande: 26.06.2002
(73) Titulaire: VALOIS S.A.S., 27110 Le Neubourg (FR)
(72) Inventeur: Garcia, Firmin, 27000 Evreux (FR); Beranger, Stéphane, 27110 Le Neubourg (FR)
(74) Mandataire: CAPRI

(56) Documents cités:
- EP-A- 0 707 895
- WO-A-00/41951
- FR-A- 2 776 989
- US-A- 4 984 702

## Description

La présente invention concerne un dispositif de fixation permettant de fixer un organe de distribution tel qu'une pompe ou une valve sur un col de récipient. Ce genre de dispositif est fréquemment utilisé dans le domaine de la parfumerie, de la cosmétique ou encore de la pharmacie pour fixer une pompe ou une valve sur un col de récipient formant un réservoir dans lequel le produit fluide à distribuer est stocké.

En général, ce genre de dispositif de fixation comprend une bague de fixation et un habillage qui s'étend autour de la bague de manière à la masquer au moins partiellement. L'habillage a une fonction esthétique, mais peut également remplir une fonction technique en coopération avec la bague de fixation. L'habillage est le plus souvent réalisé en métal pour des raisons purement esthétiques. Cependant, l'habillage pourrait également être réalisé en matière plastique.

De manière conventionnelle, la bague de fixation comprend une jupe inférieure destinée à venir en prise avec le col du récipient. Cette jupe inférieure peut s'étendre à l'intérieur du col ou autour du col comme c'est le cas généralement. Les techniques de fixation de la jupe à l'intérieur ou sur le col sont variées. Par exemple, dans le cas où la jupe s'étend autour du col, celle-ci peut former un ou plusieurs profils d'encliquetage internes destinés à venir en prise sous une partie renforcée formée par le col que l'on désigne généralement sous le terme de camette. La jupe peut être réalisée sous la forme d'un cylindre continu ou encore avec des pattes souples s'étendant côte à côte sur la périphérie de la jupe. L'habillage peut alors servir de moyens de blocage pour maintenir les pattes en prise sous la camette. Dans le cas où la jupe s'étend à l'intérieur du col, celle-ci peut par exemple être formée avec un cordon d'encliquetage externe destiné à venir se loger dans un évidement formé à l'intérieur du col.

En plus de la jupe inférieure, la bague de fixation comprend généralement des moyens de réception pour recevoir un organe de distribution tel qu'une pompe ou une valve. En général, ces moyens de réception se présentent sous la forme d'un logement d'encliquetage dans lequel l'extrémité supérieure du corps de la pompe ou de la valve est reçue par encliquetage. On peut bien entendu imaginer d'autres techniques de fixation de l'organe de distribution sur la bague de fixation.

Enfin, la bague de fixation comprend généralement une douille supérieure qui s'étend dans une direction opposée à la jupe, c'est à dire que les extrémités libres de la jupe et de la douille s'étendent en direction opposée. Dans le cas où la jupe s'étend autour du col, la douille supérieure peut être située sensiblement dans le prolongement de la jupe. Par contre, lorsque la jupe s'étend à l'intérieur du col, la douille supérieure présente un diamètre supérieur à celui de la jupe, et avantageusement supérieur à celui du col.

Quant à l'habillage, généralement métallique, il comprend un corps qui s'étend autour de la bague de fixation, en général autour de la douille et au moins une partie de la jupe inférieure. Le corps de l'habillage est généralement cylindrique, mais il peut également avoir d'autres formes, par exemple ogival. Le corps de l'habillage n'est pas forcément en contact avec la bague de fixation.

L'habillage forme également, au niveau de l'extrémité supérieure du corps, un rabat rentrant qui s'étend d'abord vers l'intérieur puis vers le bas de manière à définir un manchon interne sensiblement cylindrique. Ce manchon interne s'étend de manière sensiblement concentrique au corps de l'habillage.

Il est déjà connu dans l'art antérieur d'utiliser ce manchon intérieur pour venir en prise avec la surface interne de la douille supérieure formée par la bague de fixation.

Un tel dispositif de fixation est notamment décrit dans le document FR 2 776 989. L'habillage de ce document comprend un rabat et un manchon interne pourvu à son extrémité inférieure de dents adaptées à mordre à l'intérieur de la douille supérieure. Ceci permet d'obtenir un bon blocage en rotation de l'habillage sur la bague. Cependant, pour assurer une parfaite fixation de l'habillage sur la bague, cet habillage est en outre pourvu de moyens de retenue inférieurs qui coopèrent avec la bague de fixation. En d'autres termes, le manchon interne denté de cet habillage ne permet pas à lui seul d'assurer une fixation fiable de l'habillage sur la bague de fixation.

Le but de la présente invention est de remédier aux inconvénients précités de l'art antérieur en définissant un dispositif de fixation d'organe de distribution dans lequel l'habillage comprend un manchon interne qui réalise à lui seul une fixation parfaitement sûre sur la bague de fixation. Un autre but complémentaire est de réaliser cette fixation sûre sans mettre en oeuvre des méthodes de déformation de matière telle que le sertissage. En effet, il est relativement difficile techniquement de réaliser un sertissage au niveau du manchon. Un autre but de l'invention est de réaliser une fixation sûre au niveau du manchon par la simple mise en place de l'habillage sur la douille de la bague de fixation.

Pour atteindre ces buts, la présente invention propose que le manchon interne forme au moins une patte élastique qui s'étend vers l'extérieur et vers le haut de manière à définir une extrémité libre qui vient en contact contre la surface interne de la douille. Du fait que la patte élastique s'étend vers l'extérieur, elle vient obligatoirement en contact de la surface interne de la douille avec son extrémité libre. D'autre part, du fait que la patte élastique s'étend vers le haut, elle s'étend donc de manière inclinée avec son extrémité libre formant son extrémité supérieure. Par conséquent, une fois engagées sur la douille de la bague de fixation, les extrémités libres des pattes sont en contact appuyé contre la surface interne de la douille et s'opposent ainsi à un retrait de l'habillage en jouant le rôle de harpon. Plus on tire sur l'habillage, et plus les extrémités libres des pattes viennent mordre dans la surface interne de la douille. Il est ainsi parfaitement impossible de retirer l'habillage de la bague de fixation. En outre, du fait qu'il s'agit de pattes élastiques, qui sont par définition des éléments discrets et non continus, cela permet d'assurer en même temps un blocage en rotation de l'habillage sur 1a bague de fixation. En effet, les coins de chaque extrémité libre de patte viennent mordre dans la surface interne de la douille et jouent ainsi le rôle de coins de blocage en rotation. Par conséquent, ces pattes élastiques qui font saillie vers l'extérieur et vers le haut assurent à elles seules une parfaite fixation de l'habillage sur la bague de fixation.

Selon une caractéristique intéressante de l'invention, la douille forme un épaulement vers l'intérieur en dessous duquel l'extrémité libre de la patte est logée. Du fait que la patte est élastique, elle peut s'engager sur l'épaulement lors de la mise en place de l'habillage sur la bague de fixation, et s'étendre ensuite dans sa position naturelle vers l'extérieur et vers le haut sous l'épaulement qui forme ainsi une surface de butée empêchant définitivement le retrait de l'habillage. En variante, l'épaulement peut également se présenter sous la forme d'une rainure dans laquelle l'extrémité libre de la patte vient se loger en position finale sur la bague de fixation. L'essentiel est que l'extrémité libre de la patte vienne en appui contre une surface de butée empêchant définitivement le retrait de l'habillage de la bague de fixation.

Dans une forme de réalisation pratique, l'habillage peut comprendre au moins trois pattes élastiques réparties circonférentiellement.

Selon une autre caractéristique de l'invention, la patte peut être formée par une découpe du manchon. Cette découpe peut par exemple se présenter sous la forme d'un U renversé à l'intérieur duquel la patte est définie. Lors de la fabrication de l'habillage, la ou les pattes ainsi formées sont pliées vers l'extérieur de manière à s'étendre finalement hors de la découpe et vers le haut. Il est à noter, qu'avec un tel habillage, il n'est pas nécessaire de prévoir une opération de fixation quelconque de l'habillage sur la bague de fixation, puisque celle-ci s'opère automatiquement lorsque l'habillage est mis en place sur la bague de fixation.

Selon une autre caractéristique de l'invention, le rabat rentrant et le manchon forment un logement annulaire dans lequel la douille est engagée avec son extrémité supérieure libre, le corps de l'habillage étant espacé de la douille au niveau de l'extrémité supérieure libre. Du fait que l'extrémité supérieure du corps est ainsi libre, le rabat rentrant et le manchon interne présentent une plus grande capacité à la déformation élastique, ce qui facilite la mise en place de l'habillage sur la bague de fixation. En effet, lors de cette opération de montage, les pattes élastiques doivent être déformées pour passer sur l'épaulement en dessous duquel elles pourront à nouveau se déployer librement et ainsi réaliser une fixation définitive de l'habillage sur la bague de fixation.

L'invention sera maintenant plus amplement décrite en référence aux dessins joints donnant à titre d'exemple non limitatif un mode de réalisation de l'invention.

Sur les figures :
- la figure 1 est une vue éclatée en coupe transversale à travers un dispositif de fixation selon l'invention avec l'habillage disposé au-dessus de la bague de fixation et près à être monté dessus,
- la figure 2 est une vue en coupe transversale verticale à travers le dispositif de fixation de la figure 1 à l'état monté avec un organe de distribution, et
- la figure 3 est une vue agrandie d'un détail de la figure 2.

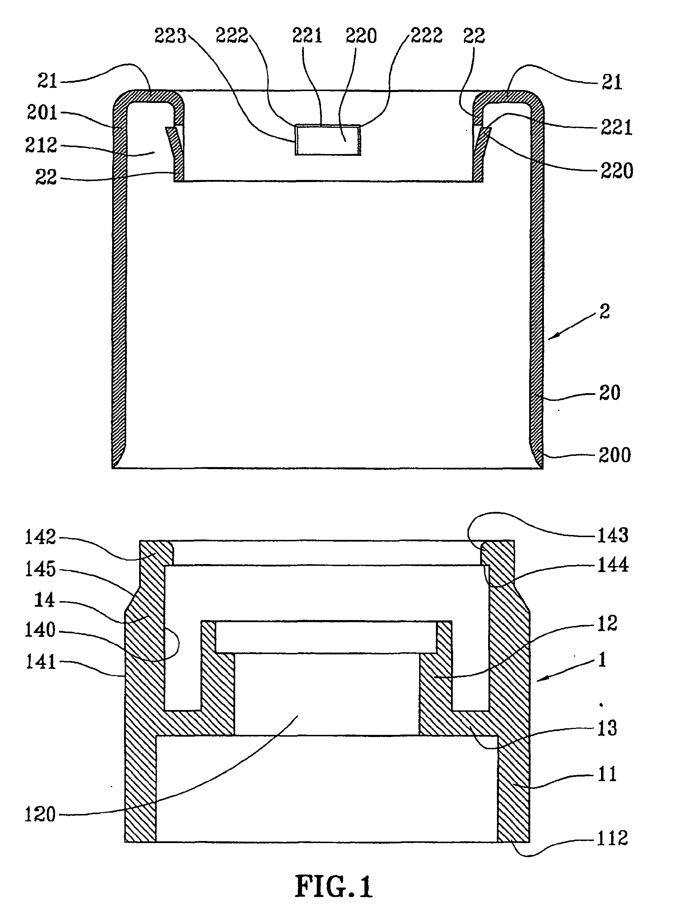

Le dispositif de fixation selon l'invention comprend essentiellement deux éléments constitutifs, à savoir une bague de fixation désignée dans son ensemble par la référence numérique 1 et un habillage désigné dans son ensemble par la référence numérique 2. Ces deux éléments sont clairement visibles de manière séparée sur la figure 1.

La bague de fixation 1 comprend une jupe inférieure 11, des moyens de réception 12, une bride de liaison 13 reliant la jupe 11 aux moyens de réception 12, et une douille supérieure 14. L'extrémité inférieure 112 de la jupe inférieure 11 est libre alors que son extrémité supérieure est reliée à la bride de liaison 13 et à la douille supérieure 14. La jupe inférieure 11 est ici destinée à coopérer avec le col d'un récipient (non représenté). La jupe inférieure 11 assure en effet la fixation de la bague 1 sur le col d'un récipient. Les moyens de fixation spécifiques permettant d'assurer la prise de la bague sur le col ne sont pas représentés sur la figure 1, car ceci n'est pas essentiel pour la présente invention. Comme susmentionné, la jupe inférieure 11 peut être formée avec des profils divers permettant de coopérer efficacement avec un col de récipient. La jupe peut par exemple former un cordon interne ou encore des pattes souples qui viennent se loger autour d'un renfort épaissi formé de manière classique par un col de récipient.

La bride de liaison 13 s'étend de manière annulaire vers l'intérieur et se connecte sur sa périphérie interne aux moyens de réception 12, qui peuvent se présenter sous la forme d'un manchon sur ou dans lequel un organe de distribution tel qu'une pompe ou une valve peut être reçu de manière stable. Là encore, les moyens spécifiques permettant la fixation de l'organe de distribution dans les moyens de réception ne sont pas représentés, car ceci n'est pas essentiel pour la présente invention. Par exemple, les moyens de réception peuvent se présenter sous la forme d'un logement à l'intérieur duquel la pompe ou la valve est reçue fixement par encliquetage. La douille supérieure 14 se connecte avec son extrémité inférieure à la jupe 11 et à la bride de liaison 13. La douille 14 définit une surface intérieure 140 et une surface extérieure 141. La douille 14 s'étend en direction opposée à la jupe 11 pour définir une extrémité supérieure libre 142 qui pointe en direction opposée à l'extrémité libre 112 de la jupe inférieure 11. Dans l'exemple de réalisation représentée, la jupe 11 et la douille 14 s'étendent sensiblement dans le prolongement l'une de l'autre pour définir une surface extérieure cylindrique commune. Ceci ne serait cependant pas le cas avec une bague de fixation dans laquelle la jupe inférieure est adaptée à venir en prise à l'intérieur du col du récipient. Dans ce cas, la jupe 11 s'étendrait plutôt dans le prolongement des moyens de réception 12.

Selon une caractéristique de l'invention, la surface interne 140 de la douille 14 forme un épaulement 143 qui fait saillie vers l'intérieur. Cet épaulement 143 forme une surface de butée inférieure 144. A la place de l'épaulement 143, on peut également prévoir une rainure annulaire formée dans la surface interne 140 qui peut alors rester parfaitement cylindrique sauf à l'endroit de la rainure. La paroi supérieure de la rainure servira alors de surface de butée telle que la surface de butée 144 formée par l'épaulement 143.

Une autre caractéristique de l'invention prévoit que la surface externe 141 forme un chanfrein 145 au niveau de l'extrémité supérieure de la douille 14.

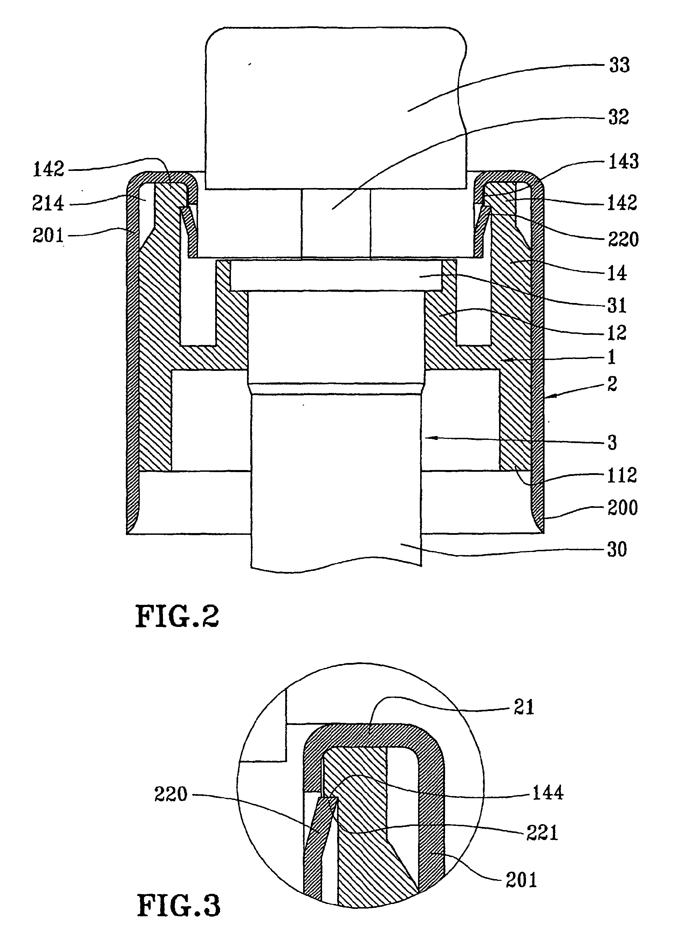

L'habillage 2 comprend un corps 20 qui est ici parfaitement cylindrique, mais qui pourrait également présenter des formes esthétiques plus compliquées, par exemple ogivales. Le corps 20 forme une extrémité inférieure libre 200 et une extrémité supérieure 201 qui se prolongent par un rabat rentrant 21 qui s'étend radialement vers l'intérieur. Ce rabat rentrant 21 se prolonge à son tour vers le bas par un manchon interne 22 qui s'étend de manière sensiblement concentrique au corps 20. L'extrémité libre du manchon 22 pointe dans la même direction que l'extrémité libre 200 du corps 20. L'extrémité supérieure 201 du corps 20, le rabat rentrant 21 et le manchon interne 22 forment ensemble un logement annulaire 212 destiné à recevoir l'extrémité libre 142 de la douille 14, comme on peut le voir sur la figure 2. Dans ce mode de réalisation, la surface interne du corps 20 de l'habillage 2 vient en contact de la bague de fixation 1, plus précisément au niveau de la douille 14 et de la jupe inférieure 11. On peut noter que la corps 20 de l'habillage 2 masque la totalité de la bague de fixation puisque son extrémité libre 200 s'étend en dessous de l'extrémité libre 112 de la jupe 11. On peut cependant remarquer que l'extrémité supérieure du corps 20 de l'habillage 2 n'est pas en contact de l'extrémité supérieure 142 de la douille 14 du fait que sa paroi externe 141 forme le chanfrein 145. Un espace libre 214 est ainsi ménagé entre l'extrémité libre 201 et la paroi externe 141. Cet espace libre 214 confère au corps 20 une certaine élasticité à ce niveau qui se répercute au niveau du rabat rentrant 21 et du manchon interne 22 qui peuvent ainsi se déplacer dans une certaine limite sans subir de déformation. Le chanfrein 145 permet également de faciliter l'engagement de l'habillage sur la douille de la bague.

Selon l'invention, le manchon interne 22 est formé avec au moins une patte souple 220, mais de préférence avec plusieurs pattes souples 220, par exemple quatre, comme représentées sur la figure 1, réparties régulièrement sur la périphérie du manchon interne 22. Ces pattes souples 220 sont formées par une découpe 223 du manchon 22. Cette découpe se présente avantageusement sous la forme d'un U renversé à l'intérieur duquel est formée la patte souple 220. Selon une caractéristique intéressante de l'invention, ces pattes souples 220 sont inclinées vers l'extérieur et vers le haut. Plus précisément, les extrémités inférieures de ces pattes souples sont reliées au manchon 22 alors que leurs extrémités libres 220 pointent vers l'extérieur et vers le haut. Ces pattes sont souples ou élastiques de sorte qu'elles peuvent être rabattues élastiquement à l'intérieur de la découpe 223 de manière à reformer un cylindre parfait. Dès que la contrainte est relâchée, les pattes élastiques reprennent leur position naturelle de repos, inclinées vers l'extérieur et vers le haut.

Selon l'invention, ces pattes souples 220 coopèrent avec la surface interne 140 de la douille 14. Plus précisément, les pattes souples 220 viennent en contact de la paroi interne 140 avec leurs extrémités libres 221 de manière à remplir une fonction de harponnage, interdisant le retrait de l'habillage une fois monté sur la bague de fixation. Les extrémités libres 221 des pattes 220 peuvent simplement venir mordre dans la matière de la douille 14, tel un harpon, mais de préférence, les extrémités libres 221 des pattes souples 220 coopèrent avec la surface de butée 144 formée par l'épaulement 143 situé à l'extrémité supérieure 142 de la douille 14. En venant se loger sous cet épaulement 143, les pattes sont définitivement encliquetées, et l'habillage ne peut plus être retiré de la bague de fixation. Cette fonction d'encliquetage définitif peut également être réalisée au moyen d'une rainure ménagée dans la surface interne 140 de la douille 14, et dans laquelle l'extrémité libre 221 des pattes vient s'encliqueter.

En outre, du fait que les pattes 220 présentent des coins anguleux 222, ceux-ci participent au blocage de l'habillage en rotation en jouant également le rôle de harpon. Une fixation définitive, aussi bien en translation qu'en rotation, est ainsi réalisée.

## Revendications

1. Dispositif de fixation d'organe de distribution sur un col de récipient, comprenant :
- une bague de fixation (1) comprenant une jupe inférieure (11) destinée à venir en prise avec un col de récipient, des moyens de réception (12) destinés à recevoir un organe de distribution (3) tel qu'une pompe ou une valve, ainsi qu'une douille supérieure (14) qui s'étend dans une direction opposée à la jupe, ladite douille (14) définissant une surface externe (141) et une surface interne (140),
- un habillage (2) qui s'étend autour de la bague (1) de manière à la masquer au moins partiellement, l'habillage (2) comprenant un corps (20) définissant une extrémité supérieure (201) formant un rabat rentrant (21) qui s'étend vers l'intérieur, puis vers le bas de manière à définir un manchon interne (22) sensiblement cylindrique, ledit manchon venant en prise avec la surface interne (140) de la douille (14),
**caractérisé en ce que** le manchon interne (22) forme au moins une patte élastique (220) qui s'étend vers l'extérieur du dispositif et vers le haut de manière à définir une extrémité libre (221) qui vient en contact contre la surface interne (140) de la douille.

2. Dispositif selon la revendication 1, l'extrémité libre de la patte élastique (220) mord dans la douille (14).

3. Dispositif selon la revendication 1 ou 2, dans lequel la douille (14) forme un épaulement (143) vers l'intérieur en dessous duquel l'extrémité libre (221) de la patte (22) est logée.

4. Dispositif selon la revendication 1 ou 2, comprenant au moins trois pattes élastiques (220) réparties circonférentiellement.

5. Dispositif selon l'une quelconque des revendications précédentes, dans lequel la patte (220) est formée par une découpe (222) du manchon (22).

6. Dispositif selon l'une quelconque des revendications précédentes, dans lequel le rabat rentrant (21) et le manchon (22) forment un logement annulaire (212) dans lequel la douille (14) est engagée avec son extrémité supérieure libre, le corps (20) de l'habillage (2) étant espacé de la douille (14) au niveau de l'extrémité supérieure libre (201).

7. Dispositif selon l'une quelconque des revendications précédentes, dans lequel les extrémités libres (221) des pattes (220) forment des coins de blocage en rotation (222) empêchant l'habillage de tourner en rotation sur la bague de fixation.

8. Dispositif selon l'une quelconque des revendications précédentes, dans lequel la douille forme un chanfrein (145) destiné à faciliter l'engagement de l'habillage sur la bague.

## Patentansprüche

1. Befestigungsvorrichtung für ein Abgabeorgan auf dem Hals eines Behälters, die folgendes umfasst:
• einen Befestigungsring (1), der eine untere Schürze (11), die dazu bestimmt ist, mit einem Hals des Behälters in Eingriff zu treten, Aufnahmeeinrichtungen (12), die dazu bestimmt sind, ein Abgabeorgan (3), wie z.B. eine Pumpe oder ein Ventil, aufzunehmen, sowie eine obere Tülle (14) aufweist, die sich in einer zur Schürze entgegengesetzten Richtung erstreckt, wobei die Tülle (14) eine äußere Oberfläche (141) und eine innere Oberfläche (140) aufweist,
• eine Umkleidung (2), die sich um den Ring (1) herum so erstreckt, dass sie ihn zumindest teilweise abdeckt, wobei die Umkleidung (2) einen Körper (20) aufweist, der ein oberes Ende (201) besitzt, das einen einspringenden Rand (21) bildet, der sich nach innen und dann nach unten derart erstreckt, dass eine im wesentlichen zylindrische innere Buchse (22) gebildet wird, wobei die Buchse mit der inneren Oberfläche (140) der Tülle (14) in Eingriff kommt,
**dadurch gekennzeichnet, dass** die innere Buchse (22) wenigstens einen elastischen Vorsprung (220) bildet, der sich zur Außenseite der Vorrichtung hin und nach oben derart erstreckt, dass ein freies Ende (121) gebildet wird, das an der inneren Oberfläche (140) der Tülle zur Anlage kommt.

2. Vorrichtung nach Anspruch 1, wobei das freie Ende des elastischen Vorsprunges (220) in die Tülle (14) eingreift.

3. Vorrichtung nach Anspruch 1 oder 2, bei der die Tülle (14) eine nach innen gerichtete Schulter (143) bildet, unter die das freie Ende (221) des Vorsprunges (22) eingefügt ist.

4. Vorrichtung nach Anspruch 1 oder 2, die wenigstens drei elastische Vorsprünge (220) umfasst, die in Umfangsrichtung verteilt angeordnet sind.

5. Vorrichtung nach einem der vorhergehenden Ansprüche, bei der der Vorsprung (220) durch eine Ausstanzung (222) der Buchse (22) gebildet ist.

6. Vorrichtung nach einem der vorhergehenden Ansprüche, bei der der einspringende Rand (21) und die Buchse (22) eine ringförmige Vertiefung (212) bilden, in welche die Tülle (14) mit ihrem oberen freien Ende eingreift, wobei der Körper (20) der Umkleidung (2) von der Tülle (14) im Bereich des oberen freien Endes (201) einen Abstand aufweist.

7. Vorrichtung nach einem der vorhergehenden Ansprüche, bei der die freien Enden (221) der Vorsprünge (220) Rotations-Blockierkanten (222) bilden, welche die Umkleidung daran hindern, sich auf dem Befestigungsring zu verdrehen.

8. Vorrichtung nach einem der vorhergehenden Ansprüche, bei der die Tülle eine Abschrägung (145) aufweist, die dazu dient, den Eingriff der Umkleidung auf dem Ring zu erleichtern.

## Claims

1. A fixing device for fixing a dispensing member to the neck of a receptacle, said fixing device comprising:
a fixing ring (1) comprising a bottom skirt (11) serving to come into engagement with a neck of a receptacle, member-receiving means (12) for receiving a dispensing member (3) such as a pump or a valve, and a top socket (14) which extends in the direction opposite to the direction in which the skirt extends, said socket (14) defining an outside surface (141) and an inside surface (140); and
trim (2) which extends around the ring (1) so as to mask it at least in part, the trim (2) comprising a body (20) defining a top end (201) forming an inwardly-extending rim (21) that extends inwards and then downwards so as to define a substantially cylindrical inner sleeve (22), said sleeve coming into engagement with the inside surface (140) of the socket (14);
said fixing device being **characterized in that** the inner sleeve (22) forms at least one resilient tab (220) which extends outwardly from the device and upwards so as to define a free end (221) which comes into contact with the inside surface (140) of the socket.

2. A device according to claim 1, in which the free end of the resilient tab (220) bites into the socket (14).

3. A device according to claim 1 or 2, in which the socket (14) forms an inwardly-projecting shoulder (143) under which the free end (221) of the tab (22) is received.

4. A device according to claim 1 or 2, including at least three resilient tabs (220) distributed circumferentially.

5. A device according to any preceding claim, in which the tab (220) is formed by a cutout (222) in the sleeve (22).

6. A device according to any preceding claim, in which the inwardly-extending rim (21) and the sleeve (22) form an annular recess (212) in which the socket (14) is engaged via its free top end, the body (20) of the trim (2) being spaced apart from the socket (14) at the free top end (201).

7. A device according to any preceding claim, in which the free ends (221) of the tabs (220) form rotation-preventing corners (222) preventing the trim from rotating on the fixing ring.

8. A device according to any preceding claim, in which the socket forms a bevel (145) serving to facilitate engaging the trim on the ring.
